Europäisches Patentamt

European Patent Office

Office européen des brevets

(19)

(11) **EP 1 184 783 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(51) Int Cl.7: **G06F 7/48**

(21) Anmeldenummer: **01119936.1**

(22) Anmeldetag: **17.08.2001**

(54) **Verlustleistungsarme Addierer- und Saturierungsschaltung**

Low power adder and saturation circuit

Additioneur et saturateur à faible consommation

(84) Benannte Vertragsstaaten:
**DE FR GB**

(30) Priorität: **24.08.2000 DE 10041511**

(43) Veröffentlichungstag der Anmeldung:
**06.03.2002 Patentblatt 2002/10**

(73) Patentinhaber: **Infineon Technologies AG**
**81669 München (DE)**

(72) Erfinder:
 • **Fugger, Paul**
 **8010 Graz (AT)**
 • **Netrval, Filip**
 **58243 Linköping (SE)**

(74) Vertreter: **Reinhard - Skuhra - Weise & Partner**
 **Postfach 44 01 51**
 **80750 München (DE)**

(56) Entgegenhaltungen:
**EP-A- 0 766 169**

• **MONTEIRO ET AL: "Retiming sequential circuits for low power" IEEE/ACM INTERNATIONAL CONFERENCE ON COMPUTER AIDED DESIGN. DIGEST OF TECHNICAL PAPERS (ICCAD). SANTA CLARA, NOV. 7 - 11, 1993, LOS ALAMITOS, IEEE. COMP. SOC. PRESS, US, Bd. CONF. 11, 7. November 1993 (1993-11-07), Seiten 398-402, XP010216527 ISBN: 0-8186-4490-7**
• **PIGUET C: "Low-Power and Low-Voltage CMOS Digital Design" MICROELECTRONIC ENGINEERING, ELSEVIER PUBLISHERS BV., AMSTERDAM, NL, Bd. 39, Nr. 1-4, 1. Dezember 1997 (1997-12-01), Seiten 179-208, XP004099509 ISSN: 0167-9317**
• **ALIDINA ET AL: "Precomputation-based Sequential Logic Optimization For Low Power" IEEE/ACM INTERNATIONAL CONFERENCE ON COMPUTER-AIDED DESIGN. DIGEST OF TECHNICAL PAPERS (ICCAD). SAN JOSE, NOV. 6 - 10, 1994, LOS ALAMITOS, IEEE COMP. SOC. PRESS, US, 6. November 1994 (1994-11-06), Seiten 74-81, XP010252244 ISBN: 0-8186-6417-7**
• **CHANDRAKASAN A P ET AL: "MINIMIZING POWER CONSUMPTION IN DIGITAL CMOS CIRCUITS" PROCEEDINGS OF THE IEEE, IEEE. NEW YORK, US, Bd. 83, Nr. 4, 1. April 1995 (1995-04-01), Seiten 498-523, XP000507210 ISSN: 0018-9219**

EP 1 184 783 B1

**Beschreibung**

Die Erfindung betrifft eine leistungssparende Additionsschaltung für digitale Daten mit einer Saturierungsschaltung zur Begrenzung des von der Additionsschaltung abgegebenen Ausgangsdatenwertebereichs.

Die EP-A-0 766 169 beschreibt eine Additionsschaltung für digitale Daten mit einem digitalen Addierer zur Addition von digitalen Eingangsdatenwerten, die an Dateneingängen des digitalen Addierers anliegen, zu einem Summenausgangsdatenwert, der an einem Ausgang des digitalen Addierers ausgegeben wird, wobei die Dateneingänge eine vorgegebene Daten-Bit-Breite n aufweisen. Mit dem Ausgang des digitalen Addierers direkt verbunden ist eine Saturierungsschaltung zur Begrenzung des an dem Eingang der Saturierungsschaltung anliegenden Summenausgangsdatenwertes innerhalb eines Datenwertebereichs, der durch einen oberen Schwelldatenwert und einen unteren Schwelldatenwert bestimmt ist.

Aus folgenden Druckschriften:

a) MONTEIRO et al.: "Retiming sequential circuits for low power" IEEE/ACM International Conference on Computer-aided Design, Digest of Technical Papers (ICCAD). Santa Clara, 7.-11. November 1993, Los Alamitos, IEEE. Comp. Soc. Press, U.S., Bd. CONF. 11, 7. November 1993 (1993-11-07), Seiten 398-402, XP010216527 ISBN: 0-8186-4490-7

b) PIGUET, C.: "Low-Power and Low-Voltage CMOS Digital Design" MICROELECTRONIC ENGINEERING, ELSEVIER PUBLISHERS BV., Amsterdam, NL, Bd. 39, Nr. 1-4, 1. Dezember 1997 (1997-12-01), Seiten 179-208, XP004099509 ISSN: 0167-9317

c) ALIDINA et al.: "Precomputation-based Sequential Logic Optimization For Low Power" IEEE/ACM International Conference on Computer-aided Design. Digest of Technical Papers (ICCAD). San Jose, Nov. 6-10, 1994, Los Alamitos, IEEE Comp. Soc. Press, U.S., 6. November 1994 (1994-11-06), Seiten 74-81, XP010252244 ISBN: 0-8186-6417-7

d) CHANDRAKASAN A. P. et al.: "Minimizing Power Consumption in Digital CMOS Circuits", Proceedings of the IEEE, IEEE. New York, U.S., Bd. 83, Nr. 4, 1. April 1995 (1995-04-01), Seiten 498-523, XP000507210 ISSN: 0018-9219

ist es bekannt, daß an Ausgängen mit einem großen Beitrag zum Glitching die Verlustleistung dadurch reduziert werden kann, daß Flip-Flops eingefügt werden.

Aus der DE 40 10 735 C2 ist eine digitale wortserielle Multiplizierschaltung bekannt. Diese dient zum Erzeugen von Produkten von zwei bitparallelen binären Signalwerten, welche jeweils Bits aufsteigenden Stellenwertes einschließlich eines niedrigststelligen Bits und eines höchststelligen Bits enthalten.

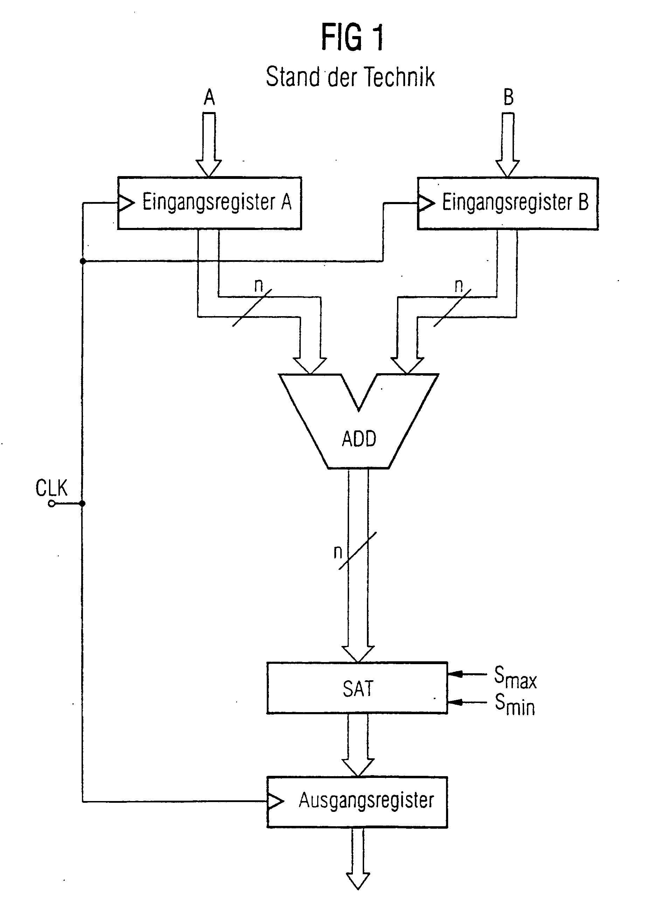

Figur 1 zeigt eine Additionsschaltung für digitale Daten mit einer Saturierungsschaltung. Die Additionsschaltung dient zur digitalen Addition zweier digitaler Datenwerte A, B. Die Datenwerte A, B werden jeweils in ein getaktetes Eingangsregister eingeschrieben und weisen eine vorgegebene Datenbitbreite n auf. Die Eingangsregister A, B dienen zum Zwischenspeichern der zu addierenden Eingangsdaten A, B und sind jeweils über n Datenleitungen mit einem Dateneingang eines digitalen Addierers ADD verbunden. Der digitale Addierer ADD ist auf n Volladdierern aufgebaut und weist einen n-Bit breiten Summenausgang zur Abgabe des durch Addition gebildeten Summenausgangsdatenwertes an eine Saturierungsschaltung SAT auf. Die Saturierungsschaltung SAT begrenzt den anliegenden Summenausgangsdatenwert innerhalb eines Datenwertebereichs, der durch einen oberen und unteren digitalen Schwellenwert $S_{min}$, $S_{max}$ bestimmt ist. Hierdurch wird ein Clipping des digitalen Ausgangssignals erreicht. Der von der Saturierungsschaltung SAT begrenzte Summenausgansdatenwert wird in einem getakteten Ausgangsregister zwischengespeichert und zur weiteren Datenverarbeitung abgegeben. Die beiden Eingangsregister A, B sowie das Ausgangsregister werden über eine gemeinsame Taktleitung durch ein Taktsignal CLK getaktet.

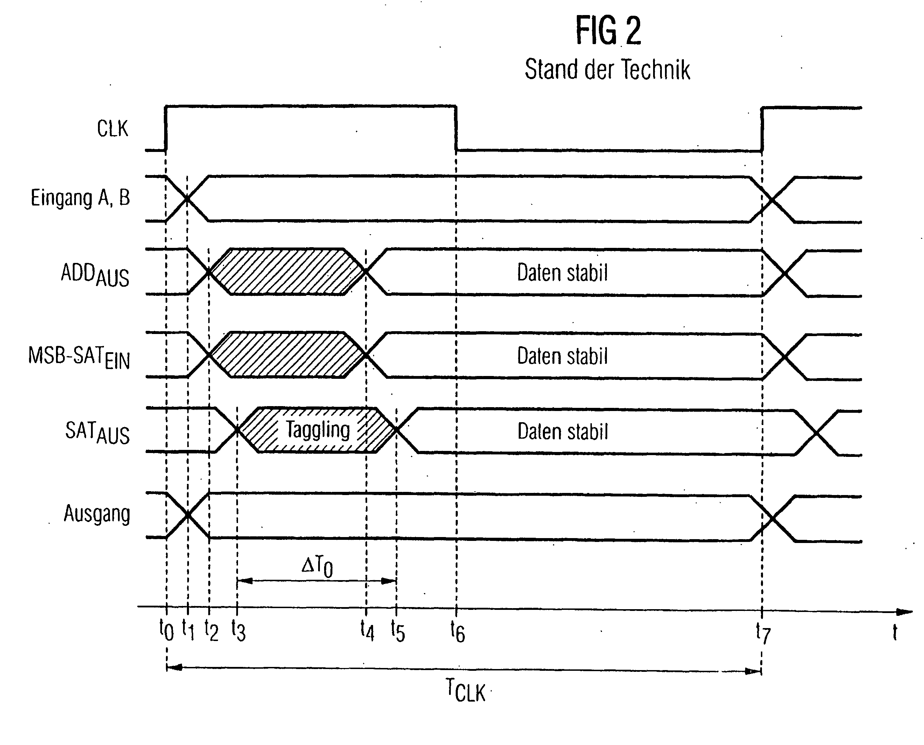

Figur 2 zeigt Zeitablaufdiagramme der Signale innerhalb der herkömmlichen Additionsschaltung, wie sie in Figur 1 dargestellt ist.

Die herkömmliche Additionsschaltung erhält über die Taktsignalschaltung das Taktsignal CLK mit einer vorgegebenen Taktperiode $T_{CLK}$. Mit der ansteigenden Flanke zum Zeitpunkt $t_0$ erfolgt ein Datenwechsel in den Eingangsdatenregistern A, B die in dem Addierer ADD aufsummiert werden. Nach einer Signallaufzeit stellt sich ab dem Zeitpunkt $t_2$ am Ausgang des Addierers ADD der Summenausgangsdatenwert ein. Dabei erfolgt ein "Glitching" am Ausgang des Addierers ADD, d. h. der Ausgangsdatenwert wackelt bzw. verändert sich bis sich der letztendliche Summenausgangsdatenwert eingestellt hat. Glitches sind Störimpulse von kurzer Zeitdauer. Die Saturierungsschaltung SAT empfängt das mit Störimpulsen behaftete digitale Ausgangssignal von dem Addierer ADD und gibt die instabilen Daten zwischen dem Zeitpunkt $t_3$ und $t_5$ und das Ausgangsregister ab. Der begrenzte Summenausgangsdatenwert schwankt ("toggling") während der Zeit $\Delta T$ zwischen dem oberen Schwellenwert, dem unteren Schwellenwert und dem Summenausgangswert des digitalen Addierers hin und her. Durch das Umschalten zwischen dem oberen Schwellenwert und dem minimalen Schwellenwert kommt es zu einer sehr hohen Anzahl von Schaltvorgängen der von der Saturierungsschaltung SAT abgegebenen Daten, so dass in der Saturierungsschaltung SAT eine hohe Verlustleistung entsteht.

Es ist daher die Aufgabe der vorliegenden Erfindung eine Additionsschaltung für digitale Daten mit einer Saturierungsschaltung zu schaffen, bei der die durch Umschaltvorgänge innerhalb der Saturierungsschaltung hervorgerufene Verlustleistung minimal ist.

Diese Aufgabe wird erfindungsgemäß durch eine Additionsschaltung für digitale Daten mit den im Patentanspruch 1 angegebenen Merkmalen gelöst.

Die Erfindung schafft eine Additionsschaltung für digitale Daten mit einem digitalen Addierer zur Addition von digitalen Eingangsdatenwerten, die an Dateneingängen des digitalen Addierers anliegen, zu einem Summenausgangsdatenwert, der an einem Ausgang des digitalen Addierers ausgegeben wird, wobei die Dateneingänge eine vorgegebene Datenbitbreite n aufweisen, einer Saturierungsschaltung zur Begrenzung des an einem Dateneingang der Saturierungsschaltung anliegenden Summenausgangsdatenwertes innerhalb eines Datenwertebereichs, der durch einen oberen Schwellenwert und einen unteren Schwellenwert bestimmt ist, wobei die n-m niederwertigen Datenbits (LSB) des Summenausgangsdatenwertes direkt an den Dateneingang der Saturierungsschaltung anliegen und die m höherwertigen Datenbites (MSB) des Summenausgangsdatenwertes über ein taktzustandsgesteuertes Latchregister an den Dateneingang der Saturierungsschaltung durchgeschaltet werden.

Die Additionsschaltung weist vorzugsweise Eingangsregister zum Zwischenspeichern der digitalen Eingangsdatenwerte auf.

Die Additionsschaltung weist vorzugsweise zusätzlich ein Ausgangsregister zum Zwischenspeichern des durch die Saturierungsschaltung begrenzten Summenausgangsdatenwertes auf.

Die Eingangsregister sowie das Ausgangsregister sind bei einer bevorzugten Ausführungsform der erfindungsgemäßen Additionsschaltung an eine Taktsignalleitung zum Anlegen eines Taktsignals CLK angeschlossen.

Das taktzustandsgesteuerte Latchregister weist vorzugsweise einen Steuereingang auf, der über einen Inverterschaltkreis mit der Taktsignalleitung verbunden ist.

Der obere und der untere Schwellendatenwert sind vorzugsweise einstellbar.

Bei einer besonders bevorzugten Ausführungsform der erfindungsgemäßen Additionsschaltung weist die Saturierungsschaltung einen ersten Komperator zum Vergleichen des anliegenden Summenausgangsdatenwertes mit dem oberen Schwellendatenwert und einen zweiten Komperator zum Vergleichen des anliegenden Summenausgangsdatenwertes mit einem unteren Schwellendatenwert auf.

Im weiteren werden bevorzugte Ausführungsformen der erfindungsgemäßen Additionsschaltung für digitale Daten unter Bezugnahme auf die beigefügten Figuren zur Erläuterung erfindungswesentlicher Merkmale beschrieben.

Es zeigen:

Figur 1 eine Additionsschaltung für digitale Daten;

Figur 2 Zeitablaufdiagramme zur Darstellung der innerhalb einer herkömmlichen Additionsschaltung auftretenden Signale;

Figur 3 ein Blockschaltbild einer bevorzugten Ausführungsform der erfindungsgemäßen Additionsschaltung für digitale Daten;

Figur 4 eine bevorzugte Ausführungsform der in der erfindungsgemäßen Additionsschaltung enthaltenen Saturierungsschaltung;

Figur 5 Zeitablaufdiagramme der in der erfindungsgemäßen Additionsschaltung auftretenden Signale.

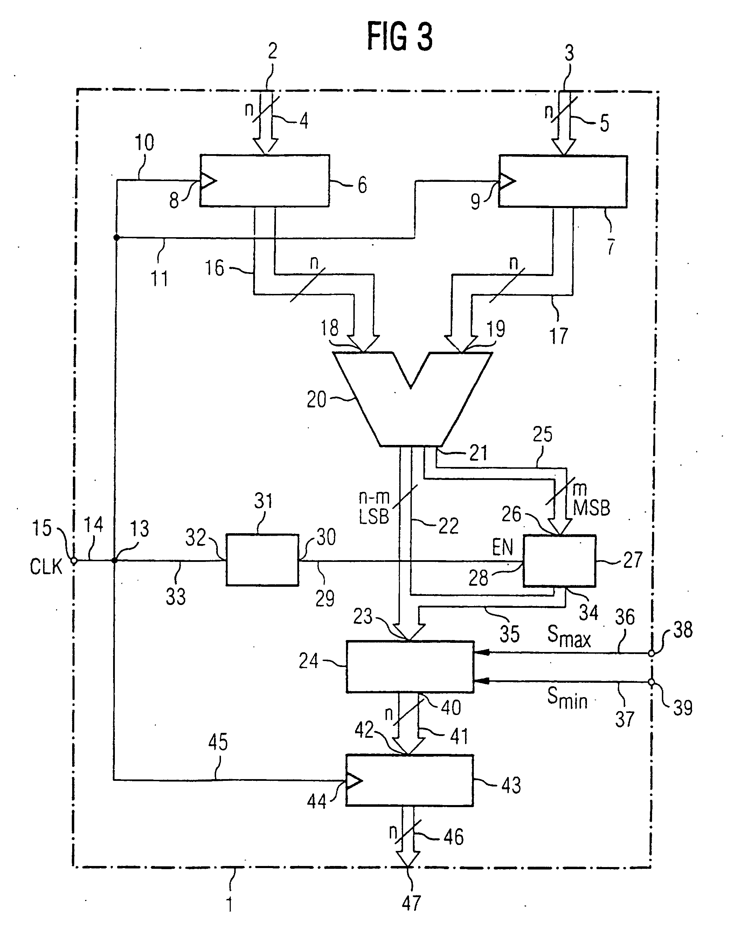

Wie in Figur 3 zu erkennen, weist die erfindungsgemäße Additionsschaltung 1 einen ersten Dateneingang 2 und einen zweiten Dateneingang 3 zum Anlegen von digitalen Eingangsdatenwerten auf. Die anliegenden Eingangsdatenwerte werden über n parallele Datenleitungen 4,5 in jeweils n-Bitbreiten Eingangsregister 6,7 zum Zwischenspeichern eingeschrieben. Die Eingangsregister 6, 7 weisen jeweils einen Taktsignaleingang 8,9 auf. Die Taktsignaleingänge 8,9 der beiden Eingangsregister 6,7 liegen über Taktleitungen 10,11,12 an einem Taktsignal-Verzweigungsknoten 13 der Additionsschaltung 1 an. Der Taktsignalverzweigungsknoten 13 ist über eine interne Taktleitung 14 mit einem Taktsignaleingang 15 der Additionsschaltung 1 verbunden. Die Datenausgänge der Eingangsregister 6, 7 sind über n parallele Datenleitungen 16, 17 mit Dateneingängen 18, 19 eines digitalen Addierers 20 verbunden. Der digitale Addierer 20 ist vorzugsweise aus Volladdierer-Bauelementen aufgebaut. Der digitale Addierer 20 addiert die beiden an den digitalen Dateneingängen 18, 19 anliegenden digitalen Eingangsdatenwerte und gibt einen Summenausgangsdatenwert über einen Datenausgang 21 ab.

Die n-m niederwertigen Datenbits (LSB) des gebildeten Summenausgangsdatenwertes werden über n-m parallele Datenbitleitungen 22 direkt an einen Dateneingang 23 einer nachgeschalteten Saturierungsschaltung 24 angelegt.

Die m höherwertigen Datenbits (MSB) des gebildeten Summenausgangsdatenwertes werden über m parallele Datenbitleitungen 25 an einen Dateneingang 26 eines taktzustandgesteuerten Latchegisters 27 angelegt. Das taktzustandgesteuerte Latchregister 27 weist einen Steuereingang 28 auf, der über eine Steuerleitung 29 an einen Ausgang 30 eines Inverterschaltkreises 31 angeschlossen ist. Der Inverterschaltkreis 31 besitzt einen Eingang 32 der über eine Signalleitung 33 mit dem Taktsignal-Verzweigungsknoten 13 verbunden ist. Der Inverterschaltkreis 31 invertiert das an seinem Eingang 32 anliegende Taktsignal CLK und gibt es als Steuersignal EN an den Steuereingang 28 des taktzustandgesteuerten Latchregisters 27 ab. Das taktzustandsgesteuerte Latchregister 27 weist einen Datenausgang 34 auf, der über m Datenbitleitungen 35 mit dem Dateneingang 23 der nachgeschalteten Saturierungsschaltung 24 verbunden ist.

Die Saturierungsschaltung 24 dient zur Begrenzung des an dem Dateneingang 23 anliegenden Summenausgangsdatenwertes innerhalb eines Datenwertebereichs, der durch einen oberen Schwellendatenwert $S_{max}$ und einen unteren Schwellendatenwert $S_{min}$ bestimmt ist. Bei einer bevorzugten Ausführungsform ist der obere und der untere Schwellendatenwert $S_{max}$, $S_{min}$ über Einstellleitungen 36, 37 und Einstellanschlüsse 38, 39 der Additionsschaltung 1 einstellbar. Die Saturierungsschaltung 24 besitzt einen Datenausgang 40 der über n parallele Datenbitleitungen 41 mit einem Eingang 42 des Datenausgaberegisters 43 der Additionsschaltung 1 verbunden ist. Das Datenausgaberegister 43 besitzt einen Takteingang 44 der über eine Taktsignalleitung 45 an den Taktsignal-Verzweigungsknoten 13 angeschlossen ist. Das Ausgangsregister 43 speichert den durch die Saturierungsschaltung 24 begrenzten Summenausgangsdatenwert zwischen und gibt ihn über n parallel geschaltete Datenbitleitungen 46 an einen Datenausgang 47 der Additionsschaltung 1 ab.

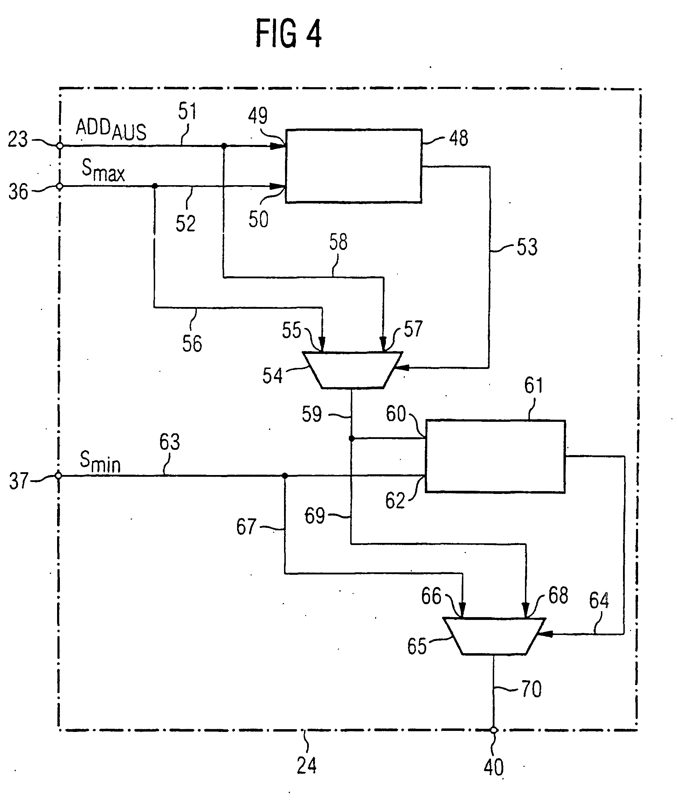

Figur 4 zeigt eine bevorzugte Ausführungsform der in der Additionsschaltung 1 enthaltenden Saturierungsschaltung 24. Die Saturierungsschaltung 24 enthält einen ersten Komparator 48 zum Vergleichen des an dem Dateneingang 23 anliegenden Summenausgangdatenwertes mit dem an der Einstellleitung 36 anliegenden oberen Schwellendatenwert $S_{max}$. Hierzu besitzt der erste Komparator 48 einen ersten Eingang 49 und einen zweiten Eingang 50 zum Empfang des von dem Addierer 20 ausgegebenen Summenausgangsdatenwert über eine Leitung 51 und zum Empfang des oberen Schwellendatenwertes $S_{max}$ über eine Leitung 52. Der erste Komparator 48 steuert über eine Steuerleitung 53 einen Multiplexer 54, der über einen ersten Dateneingang 55 und eine Datenleitung 56 den oberen Datenschwellenwert $S_{max}$ und über einen zweiten Dateneingang 57 und eine Datenleitung 58 den Summenausgangsdatenwert ADD$_{aus}$ empfängt.

Der Ausgabewert des ersten Multiplexers 54 wird über eine Datenleitung 59 an einen ersten Signaleingang 60 eines zweiten Komparators 61 und Saturierungsschaltung angelegt. Der zweite Komparator 61 besitzt einen zweiten Signaleingang 62 der über eine Leitung 63 den anliegenden einstellbaren unteren Schwellendatenwert $S_{min}$ erhält. Der zweite Komparator 61 steuert über eine Steuerleitung 64 einen zweiten Multiplexer 65, der über einen ersten Signaleingang 66 und eine Leitung 67 den unteren Schwellendatenwert $S_{min}$ empfängt. Der Multiplexer 65 weist einen zweiten Eingang 68 auf, an dem über eine Leitung 69 der von dem ersten Multiplexer 54 abgegebene Datenwert anliegt. Der zweite Multiplexer 65 ist ausgangsseitig über eine Leitung 70 mit dem Ausgang 40 der Saturierungsschaltung 24 verbunden.

Erkennt der Komparator 48, dass der von dem Addierer 20 erzeugte Summenausgangsdatenwert ADD$_{aus}$ größer ist als der eingestellte obere Schwellendatenwert $S_{max}$ steuert der Komparator 48 über die Steuerleitung 53 im ersten Multiplexer 54 derart an, dass der erste Dateneingang 55 an die Ausgangsleitungen 59 durchgeschaltet wird. Erkennt der erste Komparator 48 im umgekehrten Falle, dass der Summenausgangsdatenwert ADD$_{aus}$ kleiner ist als der obere Schwellenwert $S_{max}$ wird der Multiplexer 54 über die Steuerleitung 53 derart angesteuert, dass der zweite Dateneingang 57 und somit der anliegende Summenausgangsdatenwert an die Leitungen 59 durchgeschaltet wird.

Der zweite Komparator 61 vergleicht den an den Datenleitungen 59 anliegenden Datenwert mit dem unteren Schwellendatenwert $S_{min}$ und steuert den zweiten Multiplexer 65 über die Steuerleitung 64 entsprechend an. Ist der an den Leitungen 59 anliegende Datenwert kleiner als der minimale Schwellenwert $S_{min}$ wird der Dateneingang 66 des zweiten Komparators 65 an den Datenausgang 40 der Saturierungsschaltung 24 durchgeschaltet. Falls der an den Leitungen 59 anliegende Datenzwischenwert größer ist als der minimale Schwellendatenwert $S_{min}$ wird der zweite Eingang 68 des zweiten Multiplexers 65 an den Datenausgang 40 der Saturierungsschaltung 24 durchgeschaltet.

Bei der in Figur 4 gezeigten bevorzugten Ausführungsform wird die Saturierungsschaltung 24 durch zwei Komparatorschaltungen 48, 61 und zwei Multiplexerschaltkreise 54, 65 realisiert.

Die beiden Schwellendatenwerte $S_{min}$, $S_{max}$ werden vorzugsweise wie folgt gewählt:

$$S_{max} = 2^{(n-l)} - 1$$

$$S_{min} = -\left[2^{(n-l)}\right]$$

Der obere Schwellenwert $S_{max}$ besteht aus $\ell$ Nullen als höherwertige Datenbits MSB und n-$\ell$ Einsen als niederwertigen Datenbits. Daher beträgt $S_{max}$.

$$S_{max} = 2^{(n-l)} - 1.$$

Der untere Schwellenwert $S_{min}$ besteht aus einer Folge von $\ell$ Einsen als höherwertige Datenbits MSB und aus n-$\ell$ Nullen als niederwertige Datenbits LSB.

Der untere Schwellendatenwert $S_{min}$ beträgt somit:

$$S_{min} = -\left[2^{(n-l)}\right].$$

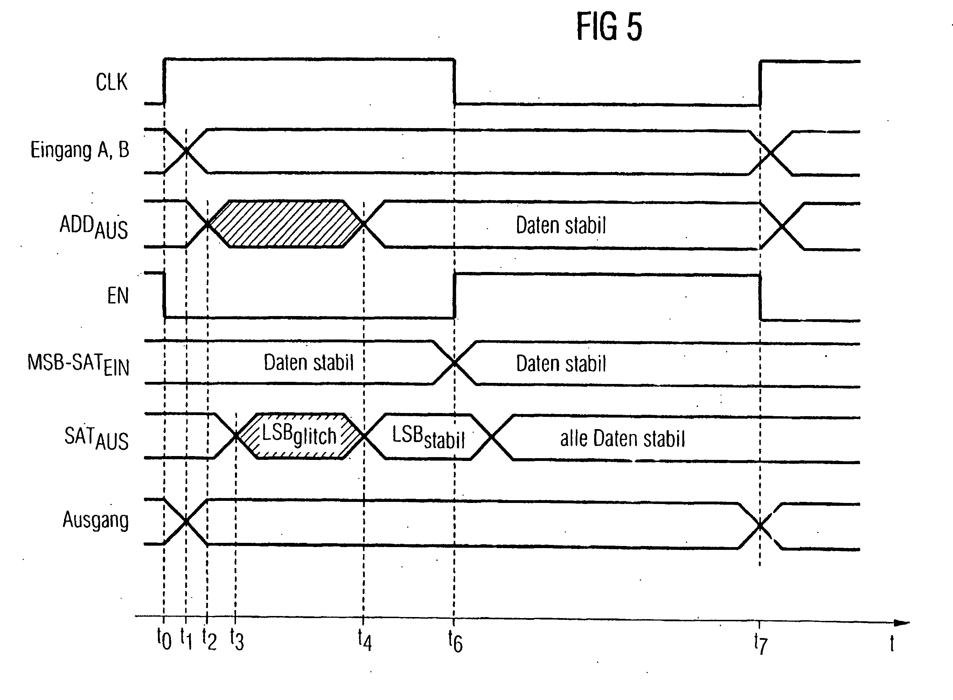

Figur 5 zeigt Zeitablaufdiagramme der Signale, die innerhalb der erfindungsgemäßen Additionsschaltung 1 auftreten, wie sie in Figur 3 dargestellt ist. An dem Taktsignaleingang 15 liegt ein gemeinsames Taktsignal CLK für die Additionsschaltung 1 an. Zum Zeitpunkt $t_0$ werden mit der ansteigenden Taktflanke des Taktsignals CLK die in den Eingangsdatenregistern 6, 7 liegenden Eingangsdatenwerte nach einer bestimmten Signallaufzeit zum Zeitpunkt $t_1$ an die Dateneingänge 18, 19 des Digitaladdierers 20 durchgeschaltet. Ab dem Zeitpunkt $t_2$ stellt sich am Ausgang 21 des digitalen Addierers 20 das digitale Ausgangssignal ein. Dabei schwankt bzw. wackelt der sich einstellende Ausgangsdatenwert am Ausgang 21 bis zum Zeitpunkt $t_4$.

An dem Steuereingang 28 der Latchschaltung 27 liegt als Freischaltsignal EN (enable) das durch den Inverterschaltkreis 31 invertierte Taktsignal $\overline{CLK}$ an. Zwischen den Zeitpunkten $t_0$ und $t_6$ werden an die Saturierungsschaltung 24 durch die Latchschaltung 27 keine höherwertigen Datenbits MSB durchgeschaltet. Zwischen den Zeitpunkten $t_2$ und $t_4$ kommt es zu einem Hin- und Herschwanken der Datenbits am Ausgang 21 der digitalen Addierers 20.

Zwischen den Zeitpunkten $t_3$ und $t_4$ tritt Glitching der niederwertigen Datentbits LSB am Ausgang 40 der Saturierungsschaltung 24 auf. Da die höherwertigen Datenbits MSB-SAT$_{ein}$ am Eingang 23 der Saturierungsschaltung 24 stabil sind wird ein Hin- und Herschwanken zwischen dem maximalen Schwellenwert $S_{max}$ und dem minimalen Schwellenwert $S_{min}$ ("Toggling")vermieden, so dass die Anzahl der auftretenden Bit-Schaltungsvorgänge minimiert wird. Die Schalt-Verlustleistung innerhalb der Saturierungsschaltung 24 wird bei der erfindungsgemäßen Additionsschaltung 1 durch das Latchregister 27 für die höherwertigen Datenbits MSB minimiert.

Damit das Toggeln bzw. Hin- und Herschwanken am Ausgang 40 der Saturierungsschaltung 24 weitestgehend vermieden wird, wird die Anzahl m der gelatchten höherwertigen Datentbits MSB vorzugsweise derart gewählt, dass gilt:

$$m > 1$$

Mit steigenden Werten für m sinkt zwar die Schalt-Verlustleistung innerhalb der Saturierungsschaltung 24 ab, jedoch nimmt die Schaltverlustleistung durch die Schaltvorgänge innerhalb des Latchregisters 27 zu. Die minimale Schaltverlustleistung innerhalb der Additionsschaltung 1 wird für:

$$m = \ell + 2$$

erreicht.

Die Datenbitbreite n der zu addierenden Eingangsdaten liegt typischerweise bei über 20 Datenbits. In Abhängigkeit von den gewählten Schwellenwerten $S_{min}$, $S_{max}$ wird für m vorzugsweise ein Wert von 4 bis 5 Datenbits gewählt.

**Patentansprüche**

1. Additionsschaltung für digitale Daten mit:

   einem digitalen Addierer (20) zur Addition von digitalen Eingangsdatenwerten, die an Dateneingängen (18, 19) des digitalen Addierers (20) anliegen, zu einem Summenausgangsdatenwert, der an einem Ausgang (21) des digitalen Addierers (20) ausgegeben wird, wobei die Dateneingänge (18, 19) eine vorgegebene Datenbitbreite n aufweisen;

   einer Saturierungsschaltung (24) zur Begrenzung des an einem Dateneingang (23) der Saturierungsschaltung (24) anliegenden Summenausgangsdatenwertes innerhalb eines Datenwertebereichs, der durch einen oberen Schwellendatenwert ($S_{max}$) und einen unteren Schwellendatenwert ($S_{min}$) bestimmt ist, dachuch gekennzeichnet dass die n-m mit n>m>0 niederwertigen Datenbits (LSB) des Summenausgangsdatenwertes direkt mit dem Taktsignal (CLK) an dem Dateneingang (23) der Saturierungsschaltung (24) anliegen und die m höherwertigen Datenbits (MSB) des Summenausgangsdatenwertes über ein taktzustandsgesteuertes Latchregister (27) an dem Dateneingang (23) der Saturierungsschaltung (24) erst mit dem invertierten Taktsignal ($\overline{CLK}$) durchgeschaltet werden.

2. Additionsschaltung nach Anspruch 1, **dadurch gekennzeichnet, dass** Eingangsregister (6, 7) zum Zwischenspeichern der digitalen Eingangsdatenwerte vorgesehen sind.

3. Additionsschaltung nach Anspruch 1 oder 2, **dadurch gekennzeichnet, dass** ein Ausgangsregister (43) zum Zwischenspeichern des durch die Saturierungsschaltung (24) begrenzten Summenausgangsdatenwertes vorgesehen ist.

4. Additionsschaltung nach einem der vorangehenden Ansprüche, **dadurch gekennzeichnet, dass** die Eingangsregister (6, 7) und das Ausgangsregister (43) an eine Taktleitung zum Anlegen eines Taktsignals (CLK) angeschlossen sind.

**5.** Additionsschaltung nach einem der vorangehenden Ansprüche, **dadurch gekennzeichnet, dass** das taktzustandgesteuerte Latchregister (27) einen Streuereingang (28) aufweist, der über einen Inverterschaltkreis (31) mit der Taktsignalleitung verbunden ist.

**6.** Additionsschaltung nach einem der vorangehenden Ansprüche, **dadurch gekennzeichnet, dass** die beiden Schwellendatenwerte ($S_{min}$, $S_{max}$) einstellbar sind.

**7.** Additionsschaltung nach einem der vorangehenden Ansprüche, **dadurch gekennzeichnet, dass** die Saturierungsschaltung (24) einen ersten Komparator (48) zum Vergleichen des anliegenden Summenausgangsdatenwertes mit dem oberen Schwellendatenwert ($S_{max}$) und einem zweiten Komparator (61) zum Vergleichen des anliegenden Summenausgangsdatenwertes mit dem unteren Schwellendatenwert ($S_{min}$) aufweist.

**Claims**

**1.** Addition circuit for digital data with:

a digital adder (20) for the addition of digital input data values which are present at data inputs (18, 19) of the digital adder (20) to form a summation output data value, which is output at an output (21) of the digital adder (20), the data inputs (18, 19) having a predetermined data bit width n, and

a saturation circuit (24) for limiting the summation output data value present at a data input (23) of the saturation circuit (24) within a data value range which is determined by an upper threshold data value ($S_{max}$) and a lower threshold data value ($S_{min}$), **characterized in that** the n-m where n>m>O, least significant data bits (LSB) of the summation output data value are present directly with the clock signal (CLK) at the data input (23) of the saturation circuit (24) and the m most significant data bits (MSB) of the summation output data value are switched through only with the inverted clock signal ($\overline{CLK}$) at the data input (23) of the saturation circuit (24) via a clock-state-controlled latch register (27).

**2.** Addition circuit according to Claim 1, **characterized in that** input registers (6, 7) are provided for buffer-storing the digital input data values.

**3.** Addition circuit according to Claim 1 or 2, **characterized in that** an output register (43) is provided for buffer-storing the summation output data value limited by the saturation circuit (24).

**4.** Addition circuit according to one of the preceding claims, **characterized in that** the input registers (6, 7) and the output register (43) are connected to a clock line for applying a clock signal (CLK).

**5.** Addition circuit according to one of the preceding claims, **characterized in that** the clock-state-controlled latch register (27) has a control input (28), which is connected to the clock signal line via an inverter circuit (31).

**6.** Addition circuit according to one of the preceding claims, **characterized in that** the two threshold data values ($S_{min}$, $S_{max}$) are settable.

**7.** Addition circuit according to one of the preceding claims, **characterized in that** the saturation circuit (24) has a first comparator (48) for comparing the present summation output data value with the upper threshold data value ($S_{max}$) and a second comparator (61) for comparing the present summation output data value with the lower threshold data value ($S_{min}$).

**Revendications**

**1.** Circuit additionneur pour données numériques comportant :

un additionneur numérique (20) servant à additionner des valeurs de données d'entrée numériques qui sont présentes à des entrées de données (18, 19) de l'additionneur numérique (20) pour former une valeur de résultat de sommation qui est délivrée à une sortie (21) de l'additionneur numérique (20), les entrées de données (18, 19) ayant une largeur de binaires d'information prédéterminée n ; un circuit de saturation (24) servant à limiter la valeur de résultat de sommation présente à une entrée de données (23) du circuit de saturation (24) dans une fourchette de valeurs de données qui est définie par une valeur de données seuil supérieure ($S_{max}$) et une valeur de données seuil inférieure ($S_{min}$),

**caractérisé en ce que** les n- m binaires d'information de poids faible (LSB) de la valeur de résultat de sommation, avec n > m > 0, sont directement présents, avec le signal d'horloge (CLK), à l'entrée de données (23) du circuit de saturation (24) et **en ce que** les m binaires d'information de poids fort (MSB) de la valeur de résultat de sommation sont commutés vers l'entrée de données (23) du circuit de saturation (24) seulement avec le signal d'horloge inversé ($\overline{\text{CLK}}$) par l'intermédiaire d'un registre à verrouillage (27) commandé en fonction de l'état de l'horloge.

2. Circuit additionneur selon la revendication 1, **caractérisé en ce qu'**il est prévu des registres d'entrée (6, 7) servant à enregistrer en mémoire-tampon les valeurs numériques des données d'entrée.

3. Circuit additionneur selon la revendication 1 ou 2, **caractérisé en ce qu'**il est prévu un registre de sortie (43) servant à enregistrer en mémoire-tampon la valeur de résultat de sommation limitée par le circuit de saturation (24).

4. Circuit additionneur selon l'une des revendications précédentes, **caractérisé en ce que** les registres d'entrée (6, 7) et le registre de sortie (43) sont raccordés à une ligne d'horloge servant à appliquer un signal d'horloge (CLK).

5. Circuit additionneur selon l'une des revendications précédentes, dans lequel le registre à verrouillage (27) commandé en fonction de l'état de l'horloge comporte une entrée de commande (28) qui est reliée à la ligne de signal d'horloge par l'intermédiaire d'un circuit inverseur (31).

6. Circuit additionneur selon l'une des revendications précédentes, **caractérisé en ce que** les deux valeurs de données seuils ($S_{min}$, $S_{max}$) sont réglables.

7. Circuit additionneur selon l'une des revendications précédentes, **caractérisé en ce que** le circuit de saturation (24) comporte un premier comparateur (48) servant à comparer la valeur de résultat de sommation présente à la valeur de données seuil supérieure ($S_{max}$) et un deuxième comparateur (61) servant à comparer la valeur de résultat de sommation présente à la valeur de données seuil inférieure ($S_{min}$).

# FIG 1
## Stand der Technik

# FIG 2

Stand der Technik

CLK

Eingang A, B

$ADD_{AUS}$      Daten stabil

$MSB\text{-}SAT_{EIN}$      Daten stabil

$SAT_{AUS}$     Taggling     Daten stabil

Ausgang

$\Delta T_0$

$t_0$ $t_1$ $t_2$ $t_3$     $t_4$ $t_5$    $t_6$             $t_7$     t

$T_{CLK}$

EP 1 184 783 B1

# FIG 3

EP 1 184 783 B1

# FIG 4

11

## FIG 5

CLK

Eingang A, B

ADD$_{AUS}$                 Daten stabil

EN

MSB-SAT$_{EIN}$     Daten stabil          Daten stabil

SAT$_{AUS}$     LSB$_{glitch}$    LSB$_{stabil}$     alle Daten stabil

Ausgang

$t_0$ $t_1$ $t_2$ $t_3$      $t_4$     $t_6$            $t_7$     t

EP 1 184 783 B1